# EUROPÄISCHE PATENTANMELDUNG

(11) **EP 4 847 831 A2**
(43) Veröffentlichungstag der Anmeldung: **02.12.2026**
(21) Anmeldenummer: 26200719.8
(22) Anmeldetag: 01.10.2019
(51) Int. Cl.: F23D 14/66

(54) **ROTIERENDER REGENERATIVBRENNER**

(30) Priorität: 04.10.2018 DE 102018124495; 25.10.2018 DE 102018126662
(62) Dokumentnummer(n) der früheren Anmeldung(en) nach Art. 76 EPÜ: 23201190.8 / 4 310 396; 19200671.6 / 3 633 267
(71) Anmelder: Jasper GmbH, 25451 Quickborn (DE)
(72) Erfinder: Ludewig, Jorn Kurt, 25337 Elmshorn (DE); Jasper, Robert, 59590 Geseke (DE); Jasper, Hans Dieter, 25494 Borstel-Hohenraden (DE)
(74) Vertreter: Schneiders & Behrendt Bochum

(57) **Zusammenfassung**

Die Erfindung betrifft einen rotierenden Regenerativbrenner (1) für eine Brennstofffeuerung, mit wenigstens einer Brennstoffzuführung (2) zur Zuführung von Brennstoff (3), wenigstens einer Verbrennungsluftzuführung (4) zur Zuführung von Verbrennungsluft (5), wenigstens einer Abgasrückführung (6) zur Rückführung von Abgas (7), und wenigstens einem Brennelement (8) zur Verbrennung von zugeführtem Brennstoffs (3) an Verbrennungsluft (5) unter Erhalt von Abgas (7). Es ist Aufgabe der Erfindung, einen gegenüber dem Stand der Technik verbesserten Brenner anzugeben, der eine effektive Energierückgewinnung bei niedrigen Anlagenkosten bietet und eine homogene Wärmeleistung ermöglicht. Hierzu schlägt die Erfindung vor, dass der Brenner zwischen wenigstens einer ersten und einer zweiten Konfiguration zyklisch wechselt, wobei in der ersten Konfiguration die Verbrennungsluftzuführung (4) durch einen ersten Teilabschnitt (A) eines Wärmetauschers (9) verläuft, wobei der erste Teilabschnitt (A) darin aufgenommene Wärme an die zugeführte Verbrennungsluft (5) abgibt, und die Abgasrückführung (6) durch einen zweiten Teilabschnitt (B) des Wärmetauschers (9) verläuft, wobei der zweite Teilabschnitt (B) Wärme aus dem Abgas (7) aufnimmt, in der zweiten Konfiguration die Verbrennungsluftzuführung (4) durch den zweiten Teilabschnitt (B) des Wärmetauschers (9) verläuft, wobei der zweite Teilabschnitt (B) darin aufgenommene Wärme an die zugeführte Verbrennungsluft (5) abgibt, und die Abgasrückführung (6) durch den ersten Teilabschnitt (A) des Wärmetauschers (9) verläuft, wobei der erste Teilabschnitt (A) Wärme aus dem Abgas (7) aufnimmt.

## Beschreibung

Die Erfindung betrifft einen Brenner für eine Brennstofffeuerung, mit wenigstens einer Brennstoffzuführung zur Zuführung von Brennstoff, wenigstens einer Verbrennungsluftzuführung zur Zuführung von Verbrennungsluft, wenigstens einer Abgasrückführung zur Rückführung von Abgas, und wenigstens einem Brennelement zur Verbrennung von zugeführtem Brennstoffs an Verbrennungsluft unter Erhalt von Abgas.

Ein solcher Brenner ist beispielsweise aus der WO 2016 / 070977 A1 bekannt. Dieser Brenner wird in Regenerativbrennersystemen mit einer Anzahl von weiteren Brennern, die jeweils einen bidirektional betreibbaren Leitungsabschnitt umfassen, abwechselnd in einem ersten Betriebsmodus und einem zweiten Betriebsmodus betrieben, wobei in dem ersten Betriebsmodus ein Brennstoff mit über den bidirektional betreibbaren Leitungsabschnitt zugeführter Verbrennungsluft unter Erhalt eines Abgases in einer Brennkammer verbrannt wird, und in dem zweiten Betriebsmodus das Abgas über den bidirektional betreibbaren Leitungsabschnitt aus der Brennkammer ausgeleitet wird. Solche Regenerativbrennersysteme ermöglichen eine Verbrennung mit Energierückgewinnung. Diese Regenerativbrennersysteme weisen hierzu eine Anzahl von Regenerativbrennern auf, die abwechselnd in einem ersten und einem zweiten Betriebsmodus betrieben werden. In einer ersten Anzahl von Regenerativbrennern, die in dem ersten Betriebsmodus betrieben werden, kann eine Verbrennung in einer Brennkammer durchgeführt werden. Dabei kann Brennstoff unter Zufuhr von Verbrennungsluft in der Brennkammer verbrannt werden. Gleichzeitig kann in einer zweiten Anzahl von Regenerativbrennern, die in dem zweiten Betriebsmodus betrieben werden, ein Abgas dieser Verbrennung aus der Brennkammer ausgeleitet werden. Zumeist weist jeder der Regenerativbrenner eine gemeinsame Zu- und Abfuhrleitung für die Verbrennungsluft bzw. das Abgas in Form eines bidirektional betreibbaren Leitungsabschnitts einer Gasleitung auf. Je nach Betriebsmodus kann dem jeweiligen Regenerativbrenner über diesen bidirektional betreibbaren Leitungsabschnitt entweder die Verbrennungsluft für die Verbrennung zugeführt oder das Abgas ausgeleitet werden. Der Brennstoff wird über eine oder mehrere separate Leitungen zugeführt. Nach einem Wechsel von dem zweiten in den ersten Betriebsmodus wird zu Beginn des ersten Betriebsmodus zumeist eine sogenannte Spülphase durchgeführt. Im Zuge dieser Spülphase wird eine Restmenge des Abgases, welche sich nach dem zweiten Betriebsmodus noch in dem jeweiligen bidirektional betreibbaren Leitungsabschnitt befindet, zunächst aus diesem entfernt. Dabei kann der entsprechende Leitungsabschnitt beispielsweise mit Luft durchgespült werden. Während dieser Spülphase kann der entsprechende Regenerativbrenner zumeist nicht für die Verbrennung genutzt werden. Erst wenn die Restmenge des Abgases vollständig aus dem bidirektional betreibbaren Leitungsabschnitt entfernt wurde, wird wieder Verbrennungsluft über den bidirektional betreibbaren Leitungsabschnitt zugeführt und der entsprechende Regenerativbrenner wird mit Brennstoff befeuert. Dies ist zeitaufwendig und führt zu Inhomogenitäten in der Wärmeleistung eines entsprechenden Regenerativbrennersystems. Außerdem sind für die Energierückgewinnung aus solchen Regenerativbrennersystemen immer mehrere Brenner erforderlich, die abwechselnd in den zwei Betriebsmodi betrieben werden, was daher zu hohen Anlagenkosten führt und die Amortisation durch die Reduzierung der Energiekosten über die Energierückgewinnung verzögert.

Es ist daher Aufgabe der Erfindung, einen verbesserten Brenner anzugeben, der eine effektive Energierückgewinnung bei niedrigen Anlagenkosten bietet und eine homogene Wärmeleistung ermöglicht.

Gelöst wird diese Aufgabe durch einen Brenner mit den Merkmalen des Anspruchs 1.

Durch die Erfindung wird ein Brenner geschaffen, der eine effektive Energierückgewinnung über den Wärmetauscher bietet, wobei der zyklische Wechsel eine gleichmäßige Wärmeleistung des Brenners ermöglicht. Außerdem sind die Anlagenkosten für einen solchen Brenner relativ niedrig, da zur Energierückgewinnung kein zusätzlicher abwechselnd betriebener Brenner nötig ist. Dadurch, dass der Brenner zwischen der ersten und der zweiten Konfiguration wechselt, kann der Wärmetauscher des Brenners abschnittsweise in den jeweiligen Konfigurationen unterschiedlich betrieben werden. Der Teilabschnitt des Wärmetauschers der in der ersten Konfiguration zur Verbrennungsluftzuführung dient, kann so in der zweiten Konfiguration nun Teil der Abgasrückführung sein. Hierdurch gibt der gleiche Teilabschnitt in der ersten Konfiguration aufgenommene Wärme an die Verbrennungsluft ab, während dieser Teilabschnitt in der zweiten Konfiguration Wärme aus dem Abgas aufnimmt. Indem der Wärmetauscher des Brenners mehrere Abschnitte aufweist, die zyklisch zur Erwärmung der Verbrennungsluft und zur Abkühlung des Abgases dienen, kann der Brenner durchgehend betrieben werden und durchgehend Energie zurückgewonnen werden. Hierdurch ist eine gleichmäßige Wärmeleistung des Brenners möglich. Der zyklische Wechsel des Brenners zwischen den Konfigurationen erfolgt vorzugsweise kontinuierlich, sodass die über den Brenner erzeugbare Wärmeleistung zeitlich homogen ist.

Vorteilhafte Ausgestaltungen und Weiterbildungen der Erfindung ergeben sich aus den abhängigen Ansprüchen. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Gemäß einer vorteilhaften Ausgestaltung der Erfindung ist vorgesehen, dass der Brenner einen Rotor umfasst, welcher dazu ausgebildet ist, den Wechsel zwischen der ersten und der zweiten Konfiguration zu bewirken. Mit einem solchen Rotor lassen sich die Teilabschnitte des Wärmetauschers zwischen Verbrennungsluftzuführung und Abgasrückführung umschalten, sodass die gleichen Teilabschnitte des gleichen Wärmetauschers zyklisch zur Erwärmung der Verbrennungsluft und zur Abkühlung des Abgases genutzt werden können, wodurch eine einfache aber effektive Energierückgewinnung möglich ist Der Rotor ist dazu ausgebildet, in einer der ersten Konfiguration zugeordneten ersten Rotationsstellung die Verbrennungsluft durch den ersten Teilabschnitt des Wärmetauschers und das Abgas durch den zweiten Teilabschnitt des Wärmetauschers zu führen und in einer der zweiten Konfiguration zugeordneten zweiten Rotationsstellung die Verbrennungsluft durch den zweiten Teilabschnitt des Wärmetauschers und das Abgas durch den ersten Teilabschnitt des Wärmetauschers zu führen. Mittels des Rotors ist ein besonders gleichmäßiger, stetig ablaufender Wechsel zwischen den Konfigurationen möglich, da durch die einfache und kontinuierliche Rotation die Teilabschnitte des Wärmetauschers über die Stellung des Rotors zyklisch zur Erwärmung der Verbrennungsluft und zur Abkühlung des Abgases genutzt werden können. Über die Rotationgeschwindigkeit kann zudem sehr einfach festgelegt werden, wie lange ein bestimmter Abschnitt Wärme aus dem Abgas aufnimmt und wie lange dieser Abschnitt nach Umschaltung in der Konfiguration zur Abgabe von Wärme an die zugeführte Verbrennungsluft verwendet wird. Je nach Rotationsstellung des Rotors wird ein bestimmter Teilabschnitt des Wärmetauschers entweder zur Erwärmung der Verbrennungsluft oder zur Abkühlung des Abgases bzw. zur Regeneration genutzt. Der Rotor wird vorzugsweise über Gleitbuchsen gelagert, die auch bei höheren Temperaturen bis ca. 250 °C einsetzbar sind. Der Rotor ist vorzugsweise so konstruiert, dass sein Masseschwerpunkt in der Rotationsachse liegt, sodass eine Unwucht und einseitige Gewichtsbelastung vermieden werden.

Eine besonders vorteilhafte Ausführung der Erfindung bezieht sich darauf, dass das Brennelement dazu ausgebildet ist, mit dem Rotor zu rotieren, wobei durch die Rotation des Brennelements zumindest eine Brennstoffaustrittsöffnung in Richtung der aus dem Wärmetauscher austretenden vorgewärmten Verbrennungsluft gerichtet ist. Über die Rotation des Brennelements zusammen mit dem Rotor ist eine einfache Möglichkeit gegeben, die Brennstoffaustrittsöffnung in Richtung der aus dem Wärmetauscher austretenden, über den Wärmetauscher vorgewärmten Verbrennungsluft auszurichten, sodass ein effiziente Verbrennung des zugeführten Brennstoffs in dem Brenner gewährleistet ist. Mit der Ausrichtung der Brennstoffaustrittsöffnung in Richtung des Teilabschnittes des Wärmetauschers, der für die Vorerwärmung der Verbrennungsluft genutzt wird, können die Verbrennungsluft und der Brennstoff effektiv zur Verbrennung vermischt werden. Der Brennstoffaustritt durch die Brennstoffaustrittsöffnung kann hierbei immer in Verbrennungsluftaustrittsrichtung zeigen. Das Brennelement ist vorzugsweise drehbar über ein Gasdrehgelenk mit dem Gehäuse des Brenners fest verbunden. Die Brennstoffaustrittsöffnung ist vorzugsweise als Gasaustrittsdüse ausgebildet, die in Richtung des Wärmetauschers gerichtet ist. Die Drehbewegung des Brennelements erfolgt vorzugsweise über einen Mitnehmer, der mit dem Rotor formschlüssig verbunden ist. Auf diese Weise überträgt der Rotor die Drehbewegung einfach auf das Brennelement. So haben Rotor und Brennelement immer dieselbe Drehzahl. Hierdurch ist die Brennstoffaustrittsöffnung immer in Richtung des Teilabschnittes am Wärmetauscher ausgerichtet, aus dem die vorgewärmte Verbrennungsluft austritt. Über eine vorzugsweise unsymmetrische Anordnung des Mitnehmers kann außerdem ein falscher Einbau des Brennelements verhindert werden. So lassen sich Montagefehler bei Wartung und Reparaturen konstruktiv vermeiden.

Eine besonders vorteilhafte Ausführung der Erfindung sieht vor, dass die Abgasrückführung zumindest abschnittsweise durch ein Abgasgehäuse gebildet ist, wobei die Verbrennungsluftzuführung zumindest abschnittsweise durch ein Luftgehäuse gebildet ist, wobei der Rotor die im Luftgehäuse gebildete Verbrennungsluftzuführung von der im Abgasgehäuse gebildeten Abgasrückführung trennt. Mit der Trennung der Verbrennungsluftzuführung von der Abgasrückführung über den Rotor lassen sich die Teilabschnitte des Wärmetauschers in den zyklisch durchlaufenen Konfigurationen abwechselnd mit dem Luftgehäuse und mit dem Abgasgehäuse verbinden, wodurch die Teilabschnitte jeweils zur Verbrennungsluftzuführung und zur Abgasrückführung verwendet werden können. Damit ist eine einfache Einleitung der Verbrennungsluft aus dem Luftgehäuse in den Wärmetauscherabschnitt, der zur Verbrennungsluftzuführung dient, möglich. Auch die Ableitung der Abgase aus der Verbrennung ist so über den Wärmetauscherabschnitt, der zur Abgasrückführung dient, sehr einfach möglich. Der Rotor ist vorzugsweise über eine Wellendichtung im Luftgehäuse vom Abgasgehäuse strömungstechnisch getrennt.

Gemäß einer vorteilhaften Ausgestaltung der Erfindung ist vorgesehen, dass eine Abgasleitung exzentrisch an dem Abgasgehäuse angebracht ist.

Eine besonders vorteilhafte Ausführung der Erfindung bezieht sich darauf, dass das Abgasgehäuse einen am Umfang angebrachten Ringkanal aufweist. Durch diesen Ringkanal werden strömungsbedingte Druckschwankungen zum Abgasrohr minimiert.

Besonders vorteilhaft ist eine Ausführungsform, die vorsieht, dass der Rotor in dem Abgasgehäuse läuft und über eine austauschbare Fächerscheibe von dem Wärmetauscher stirnseitig getrennt ist. Über die Fächerscheibe kann ein Reibungsverschleiß an dem Wärmetauscher vermieden werden, da der Rotor gegebenenfalls nur die Fächerscheibe kontaktiert.

Gemäß einer vorteilhaften Ausgestaltung der Erfindung ist vorgesehen, dass die Verbrennungsluft exzentrisch in das Luftgehäuse geblasen wird.

Eine besonders vorteilhafte Ausführung der Erfindung bezieht sich darauf, dass der Rotor innerhalb des Luftgehäuses durch einen Kettentrieb angetrieben ist. Auf diese Weise ist der Antriebsmotor von dem Heißbereich des Rotors weit genug entfernt, sodass eine hohe Lebensdauer des Antriebes und eine Verschleißminimierung erreicht werden.

Besonders vorteilhaft ist eine Ausführungsform, die vorsieht, dass über die in das Luftgehäuse geblasene Verbrennungsluft der im Luftgehäuse vorgesehene Kettentrieb und eine Lagerung des Rotors gekühlt werden.

Eine vorteilhafte Ausführung der Erfindung sieht vor, dass der Wärmetauscher zylinderförmig ausgebildet ist und koaxial zum Brennelement angeordnet ist. Mit der zylinderförmigen Ausgestaltung des Wärmetauschers und mit der koaxialen Anordnung zum Brennelement können die Teilabschnitte des Wärmetauschers einfach zyklisch zwischen den Konfigurationen umgeschaltet bzw. konfiguriert werden, wobei die Teilabschnitte des koaxial zum Brennelement angeordneten Wärmetauschers das Brennelement auf diese Weise effektiv in der einen Konfiguration mit Verbrennungsluft versorgen können und in der anderen Konfiguration durch die Verbrennung erhaltene Abgase effektiv über den Wärmetauscher ableiten können. Die Teilabschnitte des Wärmetauschers werden vorzugsweise durch Kreissektoren des zylinderförmig ausgebildeten Wärmetauschers gebildet. Mit der koaxialen Anordnung um das Brennelement können so einzelne Kreissektoren des Wärmetauschers in einer Konfiguration für die Verbrennungsluftzuführung genutzt werden, während andere Kreissektoren in dieser Konfiguration zur Abgasrückführung genutzt werden. Mit der Rotation des Brennelementes zusammen mit dem Rotor lassen sich vorzugsweise die kreissektorartig gebildeten Teilabschnitte des Wärmetauschers zyklisch durch einfache Rotation wechseln.Mit dem kontinuierlich rotierenden Rotor kann gleichsam jeder Winkelstellung des Rotors ein erster kreissektorförmiger Teilabschnitt des Wärmetauschers, der erfindungsgemäß darin zuvor gespeicherte Wärme an die Verbrennungsluft abgibt, und ein zweiter kreissektorförmiger Teilabschnitt, der von dem Abgas erwärmt wird, zugeordnet werden, wobei diese Teilabschnitte ihre Funktionen der Wärmeabgabe bzw. -aufnahme jeweils nach einer Rotation um 180° tauschen.

Besonders vorteilhaft ist eine Ausführungsform, die vorsieht, dass das Brennelement als Lanze ausgebildet ist, wobei die Lanze durch einen im Wärmetauscher vorgesehenen Lanzendurchgang hindurchragt. Die Ausgestaltung des Brennelements als Lanze, welche durch den Wärmetauscher hindurchragt, ermöglicht, das Brennelement mit seiner Brennstoffaustrittsöffnung nah an der Austrittsfläche desjenigen Teilabschnittes am Wärmetauscher zu positionieren, der als Verbrennungsluftzuführung dient. Damit ist eine effektive Erwärmung der Verbrennungsluft durch die über den Wärmetauscher rückgewonnene Wärme aus dem Abgas möglich. Das als Lanze ausgebildete Brennelement ist für verschiedene Brennstoffmedien konzipierbar, wobei je nach verwendetem Brennstoff eine für den Brennstoff ausgelegte Lanze in den Brenner eingebaut wird. Vorzugsweise sollen über das Brennelement verschiedene Gassorten wie Erdgas H, Erdgas L und LPG Gas verbrannt werden können. In der Lanze befindet sich vorzugsweise eine Zündelektrode, wobei die Zündelektrode so in die Lanze eingeschraubt ist, dass sie nicht mitrotiert. Die Zündelektrode dient zur Zündung des Gemisches aus Verbrennungsluft und Brennstoff an der Brennstoffaustrittsöffnung im Ofen.

Eine vorteilhafte Ausgestaltung sieht vor, dass der Wärmetauscher eine Wabenstruktur aufweist, wobei die Wabenstruktur Führungskanäle bildet, die dazu ausgebildet sind, die Verbrennungsluft bzw. das Abgas zu führen. Über die in der Wabenstruktur gebildeten Führungskanäle können die Verbrennungsluft und das Abgas durch den Wärmetauscher abschnittsweise zur Verbrennungsluftzuführung und Abgasrückführung verwendet werden. In der Wabenstruktur benachbart gebildete Führungskanäle werden über den Rotor zu Teilabschnitten zusammengefasst, die in der gleichen Konfiguration geschaltet sind. So bilden benachbart angeordnete Führungskanäle in der Wabenstruktur gemeinsam einen Teilabschnitt, wobei der Rotor den wabenstrukturierten Wärmetauscher in mehrere Teilabschnitte aus jeweils benachbarten Führungskanälen unterteilt. Die Wabenstruktur ist vorzugsweise aus einer Keramik hergestellt.

Gemäß einer bevorzugten Ausgestaltung der Erfindung ist vorgesehen, dass die Wabenstruktur in einen monolithischen Rahmen einbetoniert ist. Über den monolithischen Rahmen lässt sich die Wabenstruktur einfach festlegen (z.B. in der Wandung eines Ofens).

Besonders vorteilhaft ist eine Ausführungsform, die vorsieht, dass der Wärmetauscher über einen Flansch mit einem Ofengehäuse verbunden ist. Über den Flansch lässt sich der Wärmetauscher des Brenners einfach im Ofengehäuse anbringen.

Eine besonders vorteilhafte Ausführung der Erfindung sieht vor, dass der Wärmetauscher einen Kanal aufweist, wobei eine außerhalb des Wärmetauschers angeordnete UV-Photozelle über den Kanal die Flammentemperatur bei der Verbrennung überwacht. Eine solche Photozelle ermöglicht die Überwachung der Verbrennungsflamme. Die Flamme kann bis zu einer Betriebstemperatur des Feuerraums von 850 °C überwacht werden, wobei die Überwachung danach regelkonform abgeschaltet wird.

Weitere Merkmale, Einzelheiten und Vorteile der Erfindung ergeben sich aufgrund der nachfolgenden Beschreibung sowie anhand der Zeichnungen, die Ausführungsbeispiele der Erfindung zeigen. Einander entsprechende Gegenstände oder Elemente sind in allen Figuren mit den gleichen Bezugszeichen versehen. Es zeigen:
- Figur 1: erfindungsgemäßer Brenner in Schnittdarstellung,
- Figur 2: Brenner in weiterer Schnittdarstellung,
- Figur 3: Brenner in seitlicher Schnittdarstellung,
- Figur 4: Wärmetauscher in Ofenwand,
- Figur 5: Brennelement,
- Figur 6: Luftgehäuse,
- Figur 7: Rotor und
- Figur 8: Abgasgehäuse.

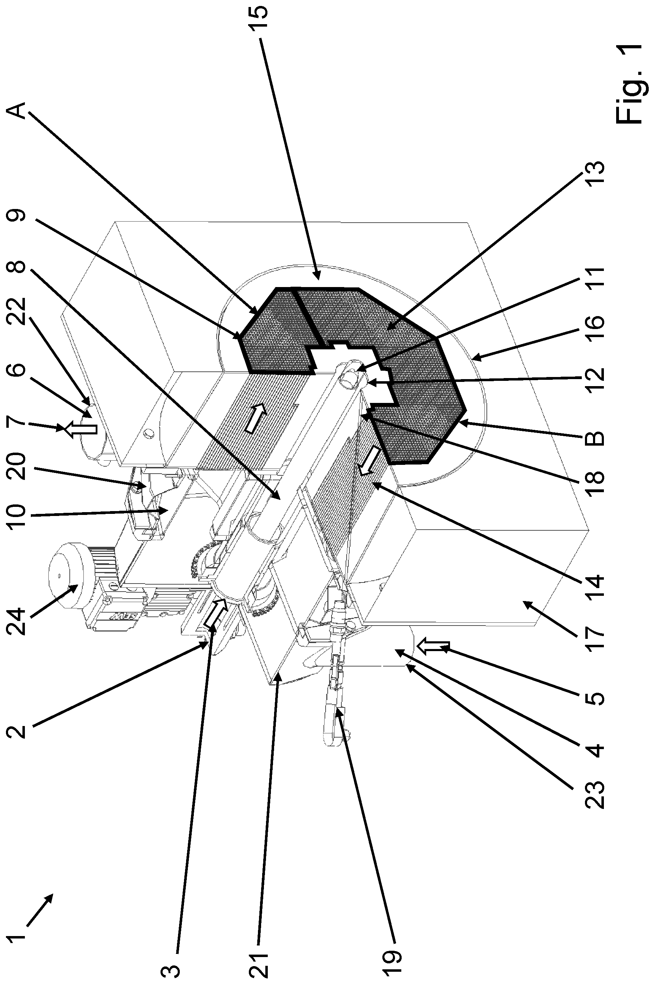

In der Figur 1 mit dem Bezugszeichen 1 bezeichnet ist ein erfindungsgemäßer Brenner dargestellt. Der Brenner 1 zur Brennstofffeuerung verfügt über eine Brennstoffzuführung 2, die zur Zuführung von Brennstoff 3, dargestellt als Blockpfeil, zur Verfeuerung dient. Außerdem weist der Brenner 2 eine Verbrennungsluftzuführung 4 auf, über die Verbrennungsluft 5, ebenfalls als Blockpfeil angedeutet, zur Unterstützung der Verbrennung zugeführt wird. Ferner umfasst der Brenner 1 ein Brennelement 8, welches zur Verbrennung von Brennstoff 3 an Verbrennungsluft 5 unter Erhalt von Abgas 7, dargestellt als Blockpfeil, dient. Der hier gezeigte Brenner 1 zeichnet sich insbesondere dadurch aus, dass er mindestens zwischen zwei Konfigurationen zyklisch wechselt. In der ersten, der beiden Konfigurationen verläuft die Verbrennungsluftzuführung 4 durch einen ersten Teilabschnitt A eines Wärmetauschers 9, wobei der erste Teilabschnitt A darin aufgenommene Wärme an die zugeführte Verbrennungsluft 5 abgibt. Die Abgasrückführung 6 verläuft in dieser ersten Konfiguration des Brenners 1 durch einen zweiten Teilabschnitt B des Wärmetauschers 9, wobei der zweite Teilabschnitt B Wärme aus dem Abgas 7 aufnimmt und sich regeneriert. In der zweiten der beiden Konfigurationen wird die Verbrennungsluftzuführung 4 durch den zweiten Teilabschnitt B des Wärmetauschers 9 gebildet, wobei der zweite Teilabschnitt B dann die darin in der ersten Konfiguration aufgenommene Wärme an die zugeführte Verbrennungsluft 5 abgibt. Die Abgasrückführung 6 wird in dieser zweiten Konfiguration durch den ersten Teilabschnitt A des Wärmetauschers 9 gebildet, wodurch der erste Teilabschnitt A die Wärme aus dem Abgas 7 aufnimmt und regeneriert wird. Über den zyklischen Wechsel zwischen den beiden beschriebenen Konfigurationen kann ein einziger Wärmetauscher 9 gleichzeitig abschnittsweise sowohl zur Erwärmung der Verbrennungsluft 5 als auch zur Regeneration aus der Wärme des Abgases 7 genutzt werden. Hierdurch kann das Brennelement 8 des gezeigten Brenners 1 durchgehend verwendet werden und die Verbrennung muss nicht zur Regeneration des Wärmetauschers 9 unterbrochen bzw. durch einen weiteren Brenner vollzogen werden. Damit lässt sich ein Brenner 1 herstellen, der eine homogene Wärmeleistung bietet und dessen Herstellungskosten verglichen mit bekannten Regenerativbrennersystemen gering ausfallen. Um zwischen den Konfigurationen wechseln zu können, verfügt der Brenner über einen Rotor 10. Der Rotor 10 rotiert während der Verbrennung des Brennstoffs 3 kontinuierlich mit im Wesentlichen konstanter Winkelgeschwindigkeit. In einer ersten Rotationsstellung des Rotors 10 befindet sich der Brenner 1 in der ersten Konfiguration. Hierbei leitet der Rotor 10 die Verbrennungsluft 5 durch den ersten Teilabschnitt A des Wärmetauschers 9, und das Abgas 7 wird durch einen zweiten Teilabschnitt B des Wärmetauschers 9 geführt. In einer zweiten, von der ersten Rotationsstellung unterschiedlichen Rotationsstellung um die Rotationsachse des Rotors 10 wird der Brenner 1 in eine zweite Konfiguration gewechselt, in welcher die Verbrennungsluft 5 durch den zweiten Teilabschnitt B des Wärmetauschers 9 geführt wird und das Abgas 7 durch den ersten Teilabschnitt A des Wärmetauschers 9 geleitet wird. Durch die kontinuierliche Drehung des Rotors 10 wird gleichsam zwischen einer beliebigen Vielzahl von ineinander übergehenden Konfigurationen des Brenners 1 gewechselt, in denen jeweils entsprechende und sich überlappende Teilabschnitte des Wärmetauschers 9 zur Erwärmung der Verbrennungsluft 5 bzw. zur Abkühlung des Abgases 7 und zur Regeneration des Wärmetauschers 9 dienen. Durch die zylinderartige Ausgestaltung des Wärmetauschers 9 koaxial zum Brennelement 8 kann die gesamte Fläche des Wärmetauschers 9 jeweils abschnittsweise zur Erwärmung der Verbrennungsluft 5 und zur Abkühlung des Abgases 7 verwendet werden, wobei die verwendeten Teilabschnitte A, B durch Sektoren der gesamten Fläche des Wärmetauschers 9 gebildet werden. Der Rotor 10 kann hierbei auch so ausgebildet sein, dass mehrere Sektoren zur Erwärmung der Verbrennungsluft 5 und mehrere Sektoren zur Abkühlung des Abgases 7 gleichzeitig genutzt werden. In diesem Fall ist das Brennelement 8 mit weiteren Brennstoffaustrittsöffnung 11 zu versehen. Das Brennelement 8 rotiert mit dem Rotor 10 derart, dass durch die Rotation des Brennelements 8 zumindest eine Brennstoffaustrittsöffnungen 11 in Richtung der aus dem Wärmetauscher 9 austretenden, vorgewärmten Verbrennungsluft 5 gerichtet ist. Der Brennstoffaustritt kann durch die rotierende Brennstoffaustrittsöffnung 11 immer in Verbrennungsluftaustrittsrichtung zeigen. Wie weiter zu erkennen, ist das Brennelement 8 als Lanze ausgebildet und ragt durch den Wärmetauscher 9 hindurch. Hierzu ist in dem Wärmetauscher 9 ein Lanzendurchgang 12 vorgesehen. Der Wärmetauscher 9 ist durch eine Wabenstruktur 13 gebildet, die vorzugsweise aus Keramik besteht. Diese Wabenstruktur 13 bildet Führungskanäle 14, die dazu dienen, die Verbrennungsluft 5 bzw. das Abgas 7 durch den Wärmetauscher 9 zu führen. Die Wabenstruktur 13 ist vorzugsweise in einem monolithischen Rahmen 15 einbetoniert. Über einen Flansch 16 ist der Wärmetauscher 9 mit dem Ofengehäuse 17 verbunden, welches zu dem vom Brenner 1 befeuerten Ofen gehört. In Figur 1 außerdem zu erkennen ist ein Kanal 18, der durch den Wärmetauscher 9 reicht. Dieser Kanal 18 ist vorgesehen, um die Flammentemperatur bei der Verbrennung über eine außerhalb des Wärmetauschers 9 angeordnete UV-Photozelle 19 zu überwachen. Die Abgasrückführung 6 des Brenners 1 ist durch ein Abgasgehäuse 20 gebildet, welches einen Anschluss 22 für die Abgasabführungsleitung umfasst. Die Verbrennungsluftzuführung 4 ist zumindest abschnittsweise durch ein Luftgehäuse 21 gebildet, welches einen Anschluss 23 für die Zuluftleitung aufweist. Der Rotor 10 trennt die im Luftgehäuse 21 gebildete Verbrennungsluftzuführung 4 von dem Abgasgehäuse 20 gebildeten Abgasrückführung 6. Über die Trennung der Verbrennungsluftzuführung 4 von der Abgasrückführung 6 durch den Rotor 10 lassen sich die Teilabschnitte A, B des Wärmetauschers 9 in den zyklisch wechselnden Konfigurationen abwechselnd mit dem Luftgehäuse 21 und mit dem Abgasgehäuse 20 verbinden, wodurch die sektorförmigen Teilabschnitte A, B jeweils zur Verbrennungsluftzuführung 4 und zur Abgasrückführung 6 verwendet werden. Hierdurch ist eine einfache Einleitung der Verbrennungsluft 5 über das Luftgehäuse 21 in den Wärmetauscherabschnitt möglich, der zur Verbrennungsluftzuführung 4 dient. Mit der Ableitung der Abgase 7 aus der Verbrennung über den Wärmetauscherabschnitt, der zur Abgasrückführung 6 dient kann die Wärme einfach regeneriert und die Abluft 7 über das Abgasgehäuse 20 abgeleitet werden. Der Rotor 10 ist über eine Wellendichtung im Luftgehäuse 21 von dem Abgasgehäuse 20 strömungstechnisch getrennt. In Figur 1 weiter zu erkennen ist der vorzugsweise am Luftgehäuse 21 angeordnete Antrieb 24 für die Rotationsbewegung des Brennelements 8 und des Rotors 10. Vorzugsweise ist für den Antrieb 24 des Rotors 10 ein Stirnradgetriebemotor vorgesehen, mit weiter vorzugsweise einer Antriebsleistung von 0,12 kW. Dieser kann vorzugsweise über einen Frequenzumformer in der Drehzahl geregelt werden. Auf diese Weise kann die Rotation des Brennelementes 8 und des Rotors 10 und der damit verbundene Wärmeaustausch in dem Wabenkörper des Wärmetauschers 9 verändert werden. Über die Drehzahl kann der Brenner 1 so optimal an den Prozess im Ofen angepasst werden. Der Stirnradgetriebemotor ist außerhalb des Brennergehäuses angeordnet und sorgt für den Antrieb eines innerhalb des Luftgehäuses 21 liegenden Kettentriebs 25. Auf diese Weise ist der Antriebsmotor 24 von dem Heißbereich des Rotors 10 weit genug entfernt, sodass eine hohe Lebensdauer des Antriebes 24 und eine Verschleißminimierung erreicht werden. Innerhalb des Luftgehäuses 21 wird der Rotor 10 durch den Kettentrieb 25 angetrieben. Über diese Ausgestaltung können unterschiedliche Längen- und Wärmedehnungen bei unterschiedlichen Betriebstemperaturen des Brenners 1 leicht aufgenommen und ausgeglichen werden. Außerdem wird über den Kettentrieb 25 eine Wärmeentkopplung des Rotors 10 zum Getriebemotor 24 erreicht. Der Kettentrieb 25 ist vorzugsweise innerhalb des Luftgehäuses 21 angeordnet, da dies die Unfallgefahr durch rotierende Bauteile erheblich minimiert und zudem für eine Kühlung des Kettentriebs 25 durch die zugeführte Verbrennungsluft 5 sorgt.

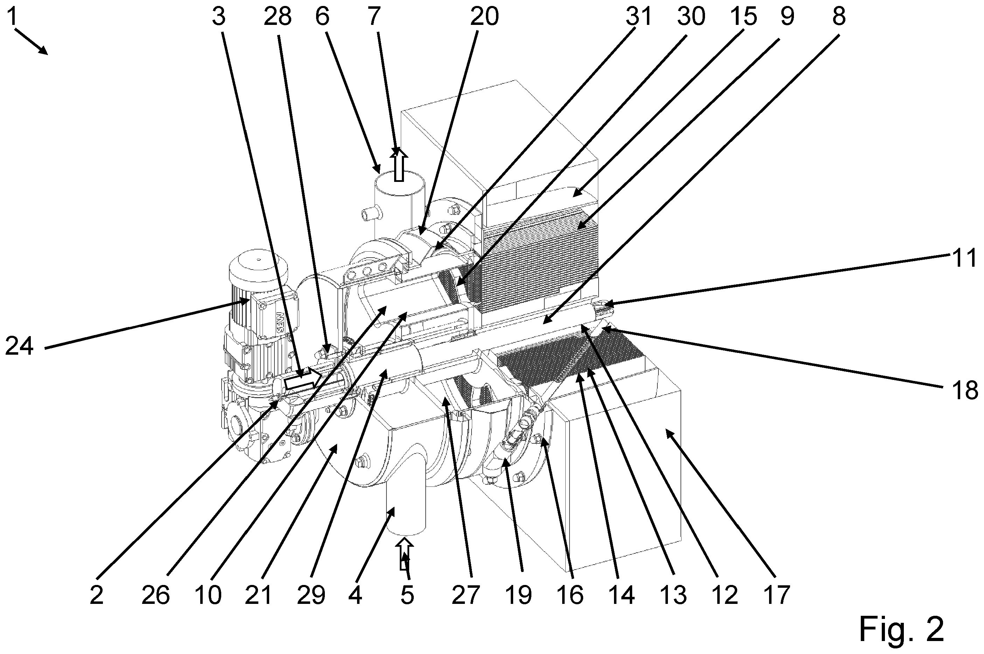

In Figur 2 ist der teilweise aufgeschnitten dargestellte Brenner 1 gemäß Figur 1 aus einer anderen Perspektive gezeigt. Hier lässt sich die Anordnung des Rotors 10 auf dem lanzenförmigen Brennelement 8 besser erkennen. Der Rotor 10 weist eine Durchführung 26 auf, die von dem Luftgehäuse 21 bis zu dem Wärmetauscher 9 führt und den Kreissektor bildet, welcher den Teilabschnitt des Wärmetauschers 9 für die Verbrennungsluftzuführung 4 umfasst. Weiterhin ist in dieser Darstellung gut zu erkennen, wie der Rotor 10 die im Luftgehäuse 21 gebildete Verbrennungsluftzuführung 4 von der im Abgasgehäuse 20 gebildeten Abgasrückführung 6 trennt. Hierzu weist der Rotor 10 eine von der Durchführung 26 abgekoppelte Kammer 27 auf. In dieser Darstellung auch gut zu erkennen ist der im Wärmetauscher 9 gebildete Kanal 18, über den die UV-Photozelle 19 die Flammentemperatur des Brenners 1 überwacht.

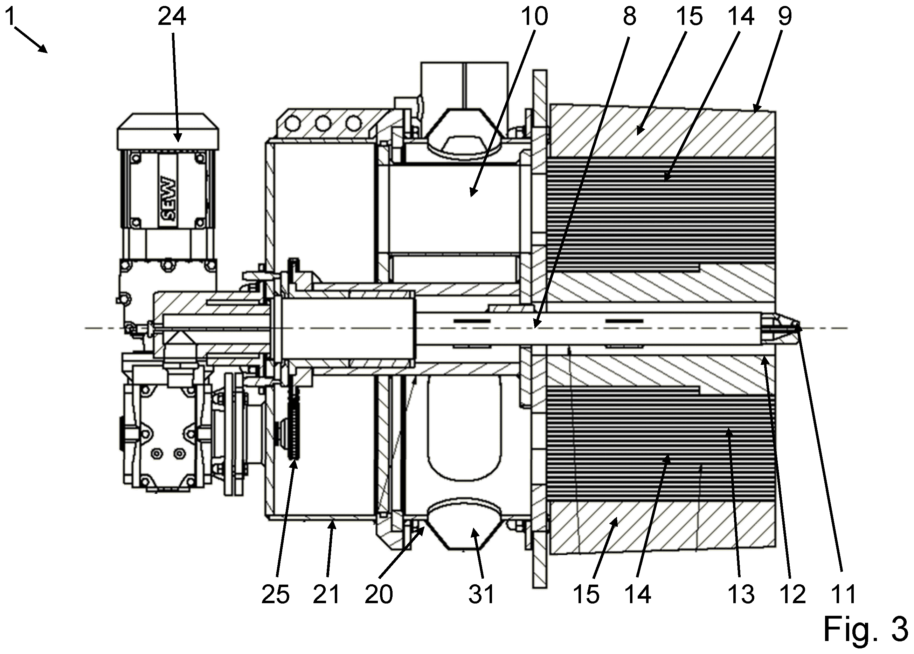

Die Figur 3 zeigt den Brenner 1 gemäß Figur 1 und 2 in einer Schnittansicht durch die Rotationsachse des Brennelements 8. In dieser Darstellung ist der im Luftgehäuse 21 angeordnete Kettentrieb 25 zur Übertragung der Antriebsleistung vom Antrieb 24 auf den Rotor 10 und das Brennelement 8 gut zu erkennen. Auch die in dem Wärmetauscher 9 gebildeten Führungskanäle 14, die sich längs des lanzenförmigen Brennelements 8 in dem wabenstrukturierten Wärmetauscher 9 erstrecken, sind in Figur 3 zu sehen. Die Wabenstruktur 13 des Wärmetauschers 9 erstreckt sich rund um den Lanzendurchgang 12, durch welchen das Brennelement 8 geführt ist. Um die Wabenstruktur 13 des Wärmetauschers 9 herum ist ein monolithischer Rahmen 15 gebildet, an welchem ein Flansch 16 angeordnet ist, über den der Wärmetauscher 9 mit dem Ofengehäuse 17 verbunden ist.

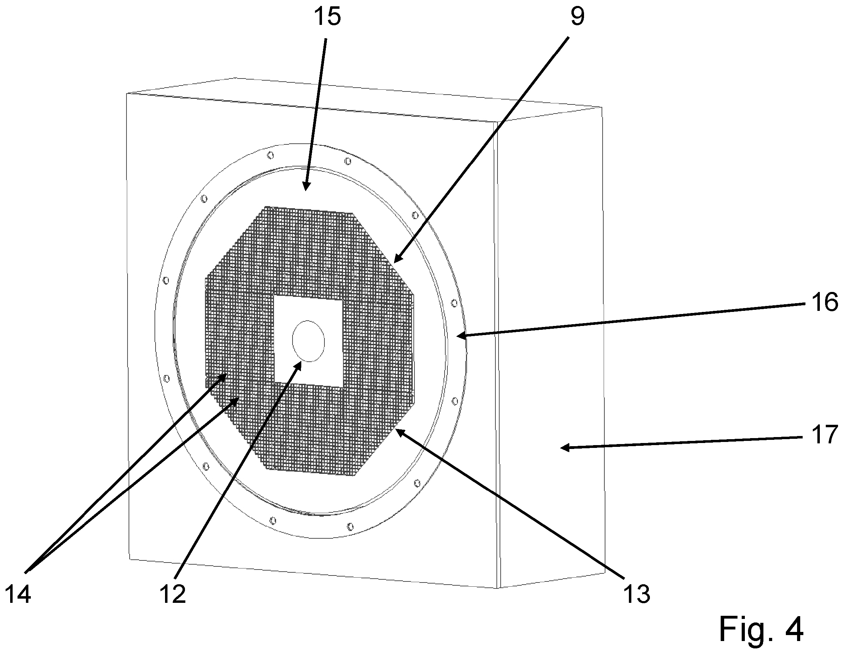

Aus Figur 4 geht eine einzelne Ansicht des Wärmetauschers 9 hervor, der hier beispielhaft in einem Ausschnitt der Ofenwand 17 angeordnet ist. Der Wärmetauscher 9 ist über den Flansch 16 an der Ofenwand 17 befestigt. Die Wabenstruktur 13 innerhalb des monolithischen Rahmens 15 ist ebenfalls gut zu erkennen und in der Mitte durch den hier gebildeten Lanzendurchgang 12 unterbrochen. Die Wabenstruktur 13 des Wärmetauschers 9 ist aus einer hoch hitzebeständigen Keramik gebildet.

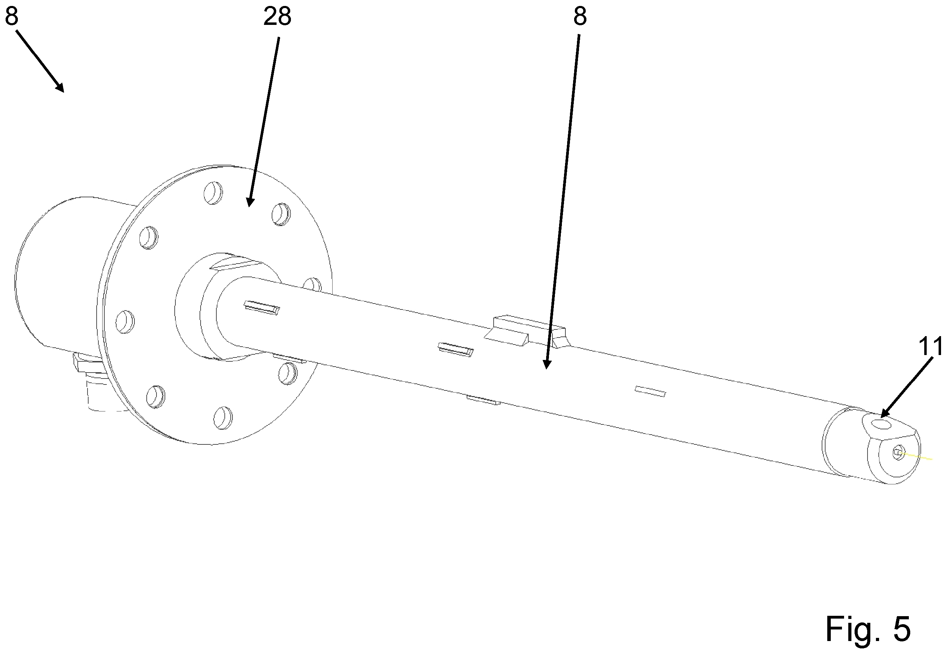

Mit Figur 5 ist eine Einzelansicht des Brennelementes 8 gegeben. Hier ist weiter zu erkennen, dass die Brennstoffaustrittsöffnung 11 am Ende des lanzenförmigen Brennelements 8 angeordnet ist. Am gegenüberliegenden Ende ist der Mitnehmer vorgesehen, über den das Brennelement 8 über den Kettentrieb 25 des Antriebes 24 angetrieben wird. Über den am Brennelement 8 vorgesehenen Flansch 28 können Ein- und Ausbau der Gaslanze 8 und des Zünders über die Stirnseite des Luftgehäuses 21 einfach erfolgen.

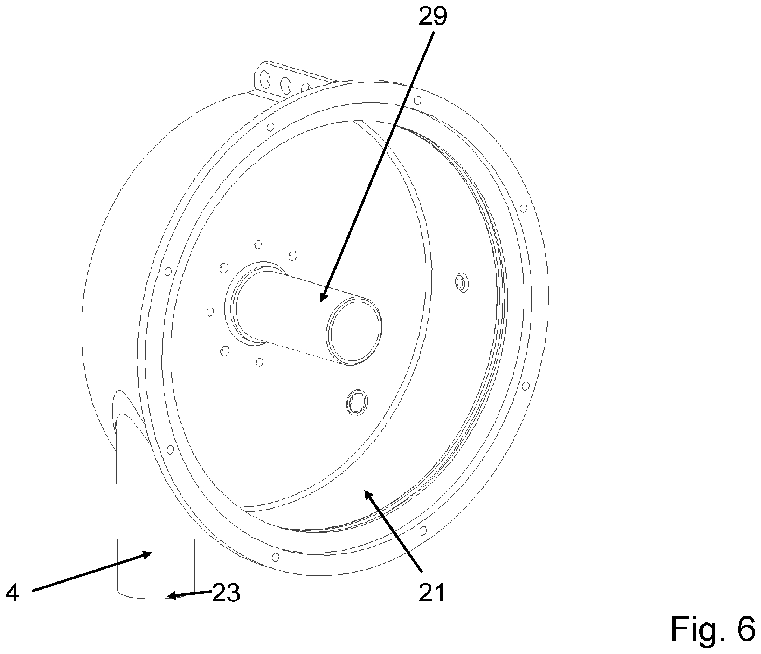

Aus Figur 6 geht eine Einzelansicht des Luftgehäuses 21 hervor. An das Luftgehäuse 21 wird vorzugsweise eine Verbrennungsluftleitung angeschlossen, welche weiter vorzugsweise einen Durchmesser von 8 cm aufweist. Vorzugsweise wird die Verbrennungsluft 5, wie aus Figur 6 ersichtlich, exzentrisch in das Gehäuse 21 geblasen. In der Mitte des Luftgehäuses 21 ist zudem ein Zentralzapfen 29 für die Lagerung des Rotors 10 zu erkennen. Über die in das Luftgehäuse 21 geblasene Verbrennungsluft 5 wird der im Gehäuse 21 vorgesehene Kettentrieb 25 und auch die Lagerung 29 des Rotors 10 gekühlt. Über Federdruckstücke in der Luftgehäusestirnseite können Kräfte des Rotors 10 aufgenommen werden. Diese können durch temperaturabhängige Längenausdehnung auftreten. Durch die Aufnahme der Kräfte kann der Rotor 10 des Brenners 1 auch bei Überhitzung nicht verklemmen. Vorzugsweise sind die Andruckkräfte einstellbar und können entsprechend den Einsatzbedingungen angepasst werden.

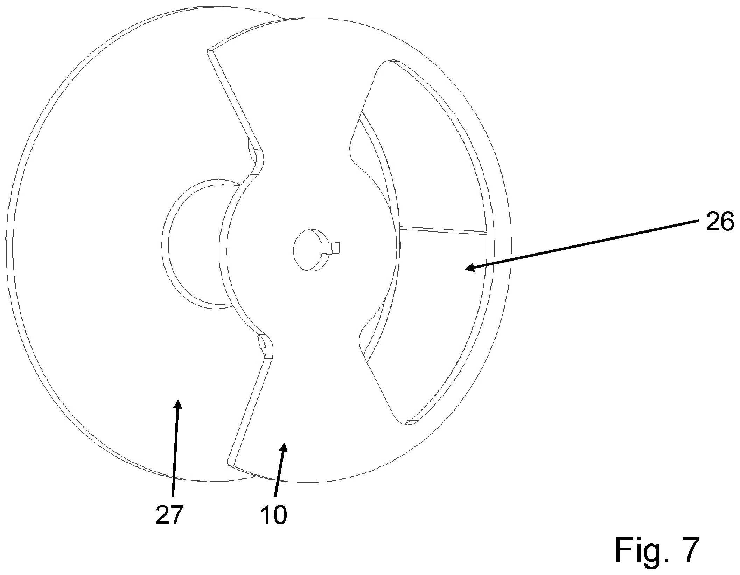

Mit Figur 7 ist das Herzstück des Brenners 1, das heißt der Rotor 10, in einer Einzelansicht gezeigt. In dieser Darstellung gut zu erkennen ist, wie die Durchführung 26 zur Durchleitung der Verbrennungsluft 5 von der Kammer 27 zur Ableitung der Abgase 7 getrennt ist. Hierdurch ist die Verbrennungsluftseite von der Abgasseite innerhalb des Brenners 1 getrennt. Über die Aufteilung der Durchführung 26 und der Kammer 27 und die Stellung des Rotors 10 werden die aktiven Teilabschnitte A, B des Wärmetauschers 9 festgelegt. Über die Rotation des Rotors 10 werden die Teilabschnitte A, B des Wärmetauschers 9, die zur Erwärmung der Verbrennungsluft 5 und zur Abkühlung der Abgase 7 dienen, fortwährend und kontinuierlich ineinander übergehend geändert. Der hier gezeigte Rotor 10 ist so konstruiert, dass sein Massenschwerpunkt in der Drehachse liegt, sodass eine Unwucht und eine einseitige Gewichtsbelastung bei der Rotation vermieden werden.

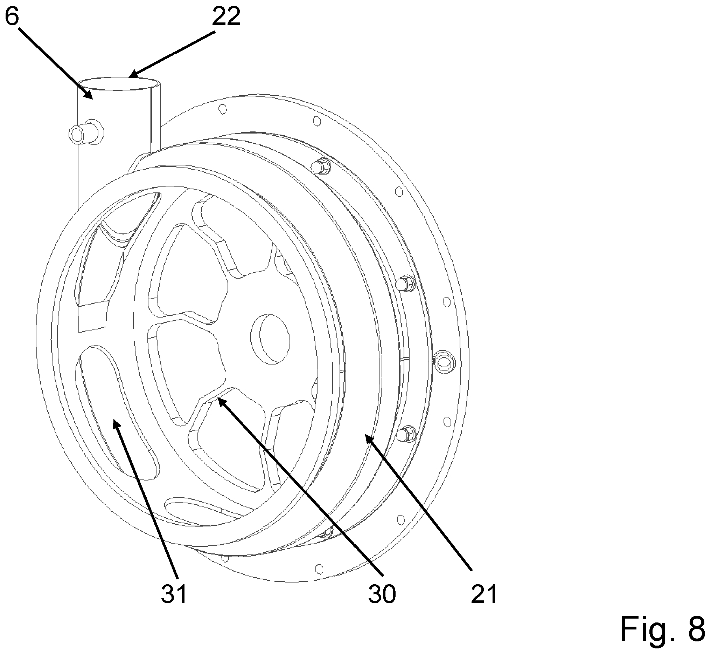

In der Darstellung gemäß Figur 8 ist das Abgasgehäuse 20 einzeln gezeigt. Das Abgasgehäuse 20 wird an eine Abgasleitung angeschlossen, welche weiter vorzugsweise einen Durchmesser von 10 cm aufweist. Bevorzugt ist die Abgasleitung exzentrisch an dem Abgasgehäuse 20 angebracht, wie es in Figur 8 erkennbar ist. Der Rotor 10 läuft in dem Abgasgehäuse 20 und wird hier über eine austauschbare Fächerscheibe 30 von dem Wärmetauscher 9 stirnseitig getrennt. Über die Fächerscheibe 30 kann ein Reibungsverschleiß an dem Wärmetauscher 9 vermieden werden, da der Rotor 10 gegebenenfalls nur die Fächerscheibe 30 kontaktiert. Um ein Pulsieren des Druckes in der Abgasleitung durch den Rotor 10 zu minimieren, besitzt das Abgasgehäuse 20 einen am Umfang angebrachten zusätzlichen Ringkanal 31. Durch diesen Ringkanal 31 werden strömungsbedingte Druckschwankungen zum Abgasrohr minimiert.

Zur Reinigung des Brenners 1 ist am Luftgehäuse 21 ein Druckstutzen vorgesehen, über den das Gehäuse 21 mit einer Pressluft von bis zu 6 bar beaufschlagt werden kann. Hierdurch lassen sich Zunderrückstände und Staubansammlung in den Führungskanälen 14 der Wabenstruktur 13 des Wärmetauschers 9 durch den erhöhten Druck in den Ofenraum blasen. Hierdurch kann der Wirkungsgrad des Wärmetauschers 9 über einen längeren Zeitraum nahezu konstant gehalten werden. Der Reinigungszyklus und die Reinigungsdauer sind nach den Betriebsbedingungen im Ofen festzulegen.

Der hier beschriebene Brenner 1 soll Kaltluftbrenner in Hochtemperaturdurchlauföfen in der Stahlindustrie ersetzen. Diese Brenner verfügen in der Regel über eine Leistung zwischen 100 kW und 1,2 MW. Der vorgeschlagene Brenner 1 kann für beliebige Leistung vergrößert oder verkleinert werden und ist so skalierbar und hoch flexibel in der Leistungsfestlegung. Vorzugsweise soll der Brenner 1 in seinen Leistungsbereich auch in der Leistung geregelt werden können. Der Regelbereich kann bis zu 1:7 betragen, wobei ein stabiler Regelbereich von mindestens 1:3 erreicht werden sollte. Alle Komponenten des Brenners 1 lassen sich einfach und mit wenigen Werkzeugen demontieren, sodass die Instandhaltung sehr einfach ist.

Ein wesentlicher Vorteil des beschriebenen Brenners ist, dass er gegen vorhandene Kaltluftbrenner ausgetauscht werden kann, wo sonst der Einsatz von energiesparenden Regenerativbrennern infolge baulicher Einschränkungen nicht möglich ist.

### Bezugszeichenliste

- 1: Brenner
- 2: Brennstoffzuführung
- 3: Brennstoff
- 4: Verbrennungsluftzuführung
- 5: Verbrennungsluft
- 6: Abgasrückführung
- 7: Abgas
- 8: Brennelement
- 9: Wärmetauscher
- 10: Rotor
- 11: Brennstoffaustrittsöffnung
- 12: Lanzendurchgang
- 13: Wabenstruktur
- 14: Führungskanäle
- 15: Rahmen
- 16: Flansch
- 17: Ofengehäuse
- 18: Kanal
- 19: UV-Photozelle
- 20: Abgasgehäuse
- 21: Luftgehäuse
- 22: Anschluss für Abgasabführungsleitung
- 23: Anschluss für Zuluftleitung
- 24: Antrieb
- 25: Kettentrieb
- 26: Durchführung
- 27: Kammer
- 28: Brennelementflansch
- 29: Zentralzapfen
- 30: Fächerscheibe
- 31: Ringkanal
- A: erster Teilabschnitt (Wärmetauscher)
- B: zweiter Teilabschnitt (Wärmetauscher)

## Patentansprüche

1. Brenner (1) für eine Brennstofffeuerung, mit
- wenigstens einer Brennstoffzuführung (2) zur Zuführung von Brennstoff (3),
- wenigstens einer Verbrennungsluftzuführung (4) zur Zuführung von Verbrennungsluft (5),
- wenigstens einer Abgasrückführung (6) zur Rückführung von Abgas (7), und
- wenigstens einem Brennelement (8) zur Verbrennung von zugeführtem Brennstoffs (3) an Verbrennungsluft (5) unter Erhalt von Abgas (7), **dadurch gekennzeichnet,**
**dass** der Brenner zwischen wenigstens einer ersten und einer zweiten Konfiguration zyklisch wechselt, wobei
in der ersten Konfiguration die Verbrennungsluftzuführung (4) durch einen ersten Teilabschnitt (A) eines Wärmetauschers (9) verläuft, wobei der erste Teilabschnitt (A) darin aufgenommene Wärme an die zugeführte Verbrennungsluft (5) abgibt, und die Abgasrückführung (6) durch einen zweiten Teilabschnitt (B) des Wärmetauschers (9) verläuft, wobei der zweite Teilabschnitt (B) Wärme aus dem Abgas (7) aufnimmt,
in der zweiten Konfiguration die Verbrennungsluftzuführung (4) durch den zweiten Teilabschnitt (B) des Wärmetauschers (9) verläuft, wobei der zweite Teilabschnitt (B) darin aufgenommene Wärme an die zugeführte Verbrennungsluft (5) abgibt, und die Abgasrückführung (6) durch den ersten Teilabschnitt (A) des Wärmetauschers (9) verläuft, wobei der erste Teilabschnitt (A) Wärme aus dem Abgas (7) aufnimmt.

2. Brenner (1) nach Anspruch 1, **dadurch gekennzeichnet, dass** der Brenner (1) einen Rotor (10) umfasst, wobei der Rotor (10) dazu ausgebildet ist, in einer der ersten Konfiguration zugeordneten ersten Rotationsstellung die Verbrennungsluft (5) durch den ersten Teilabschnitt (A) des Wärmetauschers (9) und das Abgas (7) durch den zweiten Teilabschnitt (B) des Wärmetauschers (9) zu führen und in einer der zweiten Konfiguration zugeordneten zweiten Rotationsstellung die Verbrennungsluft (5) durch den zweiten Teilabschnitt (B) des Wärmetauschers (9) und das Abgas (7) durch den ersten Teilabschnitt (A) des Wärmetauschers (9) zu führen.

3. Brenner (1) nach Anspruch 2, **dadurch gekennzeichnet, dass** der Rotor (10) kontinuierlich, d.h. mit im Wesentlichen konstanter Winkelgeschwindigkeit rotiert.

4. Brenner (1) nach Anspruch 2 oder 3, **dadurch gekennzeichnet, dass** das Brennelement (8) dazu ausgebildet ist, mit dem Rotor (10) zu rotieren, wobei durch die Rotation des Brennelements (8) zumindest eine Brennstoffaustrittsöffnung (11) in Richtung der aus dem Wärmetauscher (9) austretenden vorgewärmten Verbrennungsluft (5) gerichtet ist.

5. Brenner (1) nach einem der Ansprüche 2 bis 4, **dadurch gekennzeichnet, dass** die Abgasrückführung (6) zumindest abschnittsweise durch ein Abgasgehäuse (20) gebildet ist, wobei die Verbrennungsluftzuführung (4) zumindest abschnittsweise durch ein Luftgehäuse (21) gebildet ist, wobei der Rotor (10) die im Luftgehäuse gebildete Verbrennungsluftzuführung von der im Abgasgehäuse gebildeten Abgasrückführung trennt.

6. Brenner (1) nach Anspruch 5, **dadurch gekennzeichnet, dass** eine Abgasleitung exzentrisch an dem Abgasgehäuse (20) angebracht ist.

7. Brenner (1) nach Anspruch 5 oder 6, **dadurch gekennzeichnet, dass** das Abgasgehäuse (20) einen am Umfang angebrachten Ringkanal (31) aufweist.

8. Brenner (1) nach einem der Ansprüche 5 bis 7, **dadurch gekennzeichnet, dass** der Rotor (10) in dem Abgasgehäuse (20) läuft und über eine austauschbare Fächerscheibe (30) von dem Wärmetauscher (9) stirnseitig getrennt ist.

9. Brenner (1) nach einem der Ansprüche 5 bis 8, **dadurch gekennzeichnet, dass** die Verbrennungsluft (5) exzentrisch in das Luftgehäuse (21) geblasen wird.

10. Brenner (1) nach einem der Ansprüche 5 bis 9, **dadurch gekennzeichnet, dass** der Rotor (10) innerhalb des Luftgehäuses (21) durch einen Kettentrieb (25) angetrieben ist.

11. Brenner (1) nach Anspruch 10, **dadurch gekennzeichnet, dass** über die in das Luftgehäuse (21) geblasene Verbrennungsluft (5) der im Luftgehäuse (21) vorgesehene Kettentrieb (25) und eine Lagerung (29) des Rotors (10) gekühlt werden.

12. Brenner (1) nach einem der Ansprüche 1 bis 11, **dadurch gekennzeichnet, dass** der Wärmetauscher (9) zylinderförmig ausgebildet ist und koaxial zum Brennelement (8) angeordnet ist.

13. Brenner (1) nach einem der Ansprüche 1 bis 12, **dadurch gekennzeichnet, dass** das Brennelement (8) als Lanze ausgebildet ist, wobei die Lanze (8) durch einen im Wärmetauscher (9) vorgesehenen Lanzendurchgang (12) hindurchragt.

14. Brenner (1) nach einem der Ansprüche 1 bis 13, **dadurch gekennzeichnet, dass** der Wärmetauscher (9) eine Wabenstruktur (13) aufweist, wobei die Wabenstruktur (13) Führungskanäle (14) bildet, die dazu ausgebildet sind, die Verbrennungsluft (5) bzw. das Abgas (7) zu führen.

15. Brenner (1) nach Anspruch 14, **dadurch gekennzeichnet, dass** die Wabenstruktur (13) in einen monolithischen Rahmen (15) einbetoniert ist.

16. Brenner (1) nach einem der Ansprüche 1 bis 15, **dadurch gekennzeichnet, dass** der Wärmetauscher (13) über einen Flansch (16) mit einem Ofengehäuse (17) verbunden ist.

17. Brenner (1) nach einem der Ansprüche 1 bis 16, **dadurch gekennzeichnet, dass** der Wärmetauscher (9) einen Kanal (18) aufweist, wobei eine außerhalb des Wärmetauschers (9) angeordnete UV-Photozelle (19) über den Kanal (18) die Flammentemperatur bei der Verbrennung überwacht.
